# EUROPÄISCHE PATENTANMELDUNG

(11) **EP 2 284 974 A1**
(43) Veröffentlichungstag der Anmeldung: **16.02.2011**
(21) Anmeldenummer: 10012671.3
(22) Anmeldetag: 03.09.2004
(51) Int. Cl.: H02J 3/40

(54) **Verfahren zum Betrieb bzw. Regelung einer Windenergieanlage sowie Verfahren zur Bereitstellung von Regelleistung mit Windenergieanlage**

(30) Priorität: 03.09.2003 DE 10341057; 05.09.2003 DE 10341504
(62) Teilanmeldung aus: 04764766.4
(71) Anmelder: REpower Systems AG, 22297 Hamburg (DE)
(72) Erfinder: Fortmann, Jens, 13156 Berlin (DE)
(74) Vertreter: Glawe, Delfs, Moll

(57) **Zusammenfassung**

Verfahren zum Betrieb mindestens einer Windenergieanlage mit einem Rotor und einem mit dem Rotor gekoppelten elektrischen Generator zum Abgeben elektrischer Leistung in ein Energieverteilungsnetz mit Hilfe einer Regeleinrichtung, die den Betrieb der Windenergieanlage in deren Arbeitsbereich sicherstellt. In Abhängigkeit von der Änderung eines Netzbetriebsparameters und für eine Zeitspanne wird die Windenergieanlage so geregelt, dass eine höhere Leistung in das Netz eingespeist wird als zum Arbeitsbereich des stationären Betriebes gehört. Das gleiche trifft auch zu für ein Verfahren zum Bereitstellen von Regelleistung oder Primärregelleistung für ein elektrisches Energieerzeuger- und -verteilernetz, an welches eine Vielzahl von Kraftwerken, darunter Windenergieanlagen, angeschlossen ist und eine Windenergieanlage.

## Beschreibung

Die Erfindung bezieht sich auf Verfahren zum Betrieb mindestens einer Windenergieanlage mit einem Rotor, einem mit dem Rotor gekoppelten elektrischen Generator zum Abgeben elektrischer Leistung in ein Energieverteilungsnetz mit Hilfe einer Regeleinrichtung.

Die Erfindung bezieht sich weiterhin auf ein Verfahren zum Bereitstellen von Regelleistung oder Primärregelleistung für ein elektrisches Energieerzeuger- und -verteilernetz, an welches eine Vielzahl von Kraftwerken, darunter Windenergieanlagen, und Verbraucher, angeschlossen ist.

Die Erfindung bezieht sich ferner auf ein Verfahren zur Regelung einer Windenergieanlage, aufweisend mindestens einen einen Rotor und einen Generator umfassenden Triebstrang und einer Regeleinrichtung, wobei die Windenergieanlage eine bauartbedingte Mindestdrehzahl zur Netzeinspeisung aufweist.

Schließlich bezieht sich die Erfindung auch auf Windenergieanlagen.

Änderungen der Wirkleistungsabgabe eines Energieerzeugers, wie sie bei Windkraftanlagen üblich sind, führen in einem Energieverteilungsnetz zu Änderungen der Netzfrequenz, wenn nicht durch die Regelung anderer Kraftwerke sichergestellt werden kann, dass soviel Energie in das Netz gespeist wird, wie auch durch die angeschlossenen Verbraucher abgenommen wird. Durch den zunehmenden Anteil von Windkraftanlagen im Energieverteilungsnetz steigen für die Netzbetreiber die Kosten für das Ausregeln der durch die Windkraft verursachten Schwankungen der Einspeiseleistung.

Es ist ein Verfahren zum Betreiben einer Windenergieanlage mit einem von einem Rotor antreibbaren elektrischen Generator zum Abgeben elektrischer Leistung an ein elektrisches Netz bekannt (DE 100 22 974 A1). Hierbei wird die von dem Generator an das Netz abgegebene Leistung in Abhängigkeit der Netzfrequenz des elektrischen Netzes geregelt bzw. eingestellt, wobei bei einem Anstieg der Netzfrequenz die abgegebene Leistung heruntergeregelt wird. Hierbei geht es jedoch nicht um die Bereitstellung von Regelleistung und die vorgeschlagenen Maßnahmen wären hierfür auch ungeeignet.

Im Normalbetrieb eines Netzes ohne Windkraftanlagen ist die Einregelung unproblematisch, weil sich lediglich die Last bzw. die abgenommene Leistung ändert. Aber selbst in einem Netz mit konventionellen und mit Windkraftanlagen sind die erforderlichen Regelungsvorgänge zu bewältigen. Deutlich anders ist die Situation dann, wenn nicht vorhersehbare Störungen in einem gemischten Netz mit Windkraftanlagen auftreten, also etwa ein Leistungsausfall oder ein Spannungseinbruch als Folge eines Erdschlusses oder Kurzschlusses. Windkraftanlagen, so wie sie bisher betrieben werden, können in diesem Fall keine zusätzliche Leistung bereitstellen, wie konventionelle Kraftwerke dies tun können, um auf diese Weise den Primärregelbedarf des Netzbetreibers zu reduzieren. Jedoch könnte man die Windkraftanlage gedrosselt betreiben, also mit einer Leistung, die unterhalb derjenigen liegt, die die Windkraftanlage abgeben könnte, wenn sie optimal auf die vorhandenen Windverhältnisse eingestellt wäre. Dies müsste allerdings unter ständiger Berücksichtigung der sich ändernden Netzverhältnisse geschehen, lokal und länderübergreifend sowie den Bedürfnissen der Netzbetreiber, aber auch der Windverhältnisse entsprechend, die nun alles andere als konstant und gar hinreichend genau vorhersehbar sind.

Die Primärregelleistung z.B. bei einer Störung im Netz muss schnell aktiviert werden, um dem durch eine Störung eingeleiteten Frequenzabstieg entgegenwirken zu können, bevor die Frequenz auf einen kritischen Wert abgesunken ist. Neben der schnellen Aktivierung muss aber auch ausreichend Leistungsreserve vorgehalten werden. In Wärmekraftwerken erfolgt die Vorhaltung der Primärregelleistung durch Androsselung der Turbineneinlassventile, wobei der Netzbetreiber sicherstellt, dass die Androsselung nur zeitlich begrenzt ist und dass die vorhandene Sekundärregelleistung die Primärregelleistung rechtzeitig ablösen kann. Eine solche Androsselung stellt energetisch betrachtet keinen Verlust dar, da weniger Brennstoff verbraucht wird, der zu einem späteren Zeitpunkt dann zur Verfügung steht.

Bei einer Windkraftanlage könnte man eine Regelreserve auch durch eine solche "Androsselung" der Windenergieanlage zur Verfügung stellen, so dass die Windenergieaniage mit einer geringeren Leistung betrieben wird, ais dies die Windverhältnisse zuließen. Dies bedeutet aber in einer energetischen Betrachtungsweise, dass die zur Verfügung stehende Windenergie dann nicht genutzt wird, wenn dies möglich wäre, d.h. der Wind streicht bei diesem Betrieb ungenutzt an der Windenergieanlage vorbei.

Diese Androsselung einer Windenergieanlage ist also eine sehr kostenaufwendige Maßnahme, da der nicht genutzte Teil der Energie des Windes eben nicht gespeichert wird. Bei einer Gasturbine wird im Androsselungsbetrieb hingegen Primärenergie zurückbehalten und kann zu einem späteren Zeitpunkt eingesetzt werden.

Tatsächlich sind die Verhältnisse in solchen gemischten Energieverteilersystemen so, dass die Windenergieanlagen mit ihren umrichtergespeisten Systemen bei konventioneller Arbeitsweise keinen Beitrag zur Netzstabilität und Massenträgheit des Netzes leisten. Selbst wenn Windkraftanlagen mit Umrichtern am Netz mit konstanter Leistung betrieben werden würden, so würde dies noch zur Erhöhung des notwendigen Regelbedarfs führen, was mit konventionellen Kraftwerken mit deren Primärregelleistung ausgeglichen werden müsste.

Durch die vorliegende Erfindung soll ein Netz mit konventionellen Kraftwerken und Windenergieanlagen bzw. eine Windkraftanlage so betrieben werden, dass die Windenergieanlage Primärregelleistung zur Verfügung stellt und insbesondere soll die Windenergieanlage zur Bereitstellung von Regelleistung herangezogen werden.

Erreicht wird dies durch die in den kennzeichnenden Teilen der Ansprüche angegebenen Merkmale.

Ein Verfahren zum Betrieb mindestens einer Windenergieanlage gemäß der Erfindung bezieht sich auf eine Windenergieanlage mit mindestens einem Rotor mit Rotorblättern, einem in ein Energieverteilungsnetz einspeisenden Generator und einer Regeleinrichtung, die die Leistungseinspeisung gemäß den Betriebsverhältnissen regelt und ist dadurch charakterisiert, dass die Regeleinrichtung abhängig von den Änderungen eines Parameters des Netzes die Leistungsabgabe in das Netz für eine Zeitspanne nennenswert erhöht, indem ein Teil der kinetischen Energie der rotierenden Teile (des Triebstranges) zusätzlich zur Einspeisung herangezogen wird.

Als ein solcher Parameter kommt aber auch die Drehzahl, die Leistung und auch der Blattwinkel der Rotorblätter in Frage. Eine Windenergieanlage, die nach diesem Verfahren gemäß der Erfindung arbeiten kann, wird in einem gewissen Arbeitsbereich betrieben. Hierunter werden die zu den aktuellen Betriebsbedingungen gehörenden Parameter, wie z.B. die Drehzahl, die Leistung der Blattwinkel verstanden. Es wird von einem Arbeitsbereich und nicht einem Arbeitspunkt gesprochen, weil die äußeren Bedingungen für eine Windenergieanlage ständigen Schwankungen unterworfen sind und somit eine so genannte dynamische Regelung erforderlich machen.

Ändert sich ein Betriebsparameter (z.B. die Netzfrequenz) um einen bestimmten vorgegebenen Wert innerhalb einer bestimmten Zeitspanne, so ist dies gemäß der Erfindung ein Kriterium, um die Windenergieanlage bzw. mehrere -anlagen so zu betreiben, dass sie eine übermäßige Leistung in das Netz einspeist bzw. einspeisen, und zwar unabhängig davon, ob zu diesem Zeitpunkt die zugehörige bzw. erforderliche Windenergie überhaupt zur Verfügung steht.

Lediglich als Beispiel und nicht zur Einschränkung sei hier eine Windenergieanlage mit 1,5 MW Leistung angeführt, bei welcher bei einer Absenkung der Drehzahl von 1800 rpm auf 1600 rpm für 10 s ca. 11 % der Nennleistung oder für 1 s ca. 100 % zusätzlich eingespeist werden kann.

Nach der Erfindung wird eine solche Änderung des Netzbetriebes erfasst und hieraus ein Signal erzeugt, das zu Steuerungs- bzw. Regelungszwecken an der bzw. den Windenergieanlagen eingesetzt wird.

Änderungen der Betriebsparameter könnten erfindungsgemäß an irgendeiner Stelle des Netzes erfasst werden, wobei das daraus hergeleitete Signal auch distal eingesetzt werden kann, und zwar je nach den Verhältnissen und den Eigenschaften des Netzes und auch hinsichtlich der Eigenschaften der einzelnen Windenergieanlagen, nämlich mehr oder weniger Regelleistung zur Verfügung stellen zu können. Hier könnte gemäß der Erfindung so vorgegangen werden, dass ein zentraler Netzrechner die Signale so berechnet, dass die einzelnen Windenergieanlagen unterschiedlich zur Einspeisung von Regelleistung herangezogen werden, um das Netz insgesamt optimal zu betreiben. Hierbei ist gemäß der Erfindung an eine Grenzwerterfassung durch eine Sensorik in einer windenergieaniage oder eine zentrale windparküberwachung oder auch an eine zentrale Netzüberwachung des Netzbetreibers bzw. Energieversorgers gedacht.

Gemäß der Erfindung wird ein geeigneter Betriebsparameter herangezogen und dessen zeitliche Änderung bzw. Änderungsgeschwindigkeit herangezogen, vorzugsweise wird dies die Frequenzänderung bzw. -änderungsgeschwindigkeit sein, wobei zweckmäßige Grenzwerte zu Grunde gelegt werden, z.B. 0,2 Hz in einem 50 Hz-Netz und/oder 0,05 Hz/s. Abhängig von der Stabilität des Netzes ist ein ausreichend großer Totbereich erforderlich, um zu vermeiden, dass das Störungssignal zu häufig ausgelöst wird, was zu einem nennenswerten Ertragsverlust führen würde. Der für ein sehr steifes Netz wünschenswerte Grenzwert von 0,01 Hz/s kann z.B. bei einem schwachen Netz zu einem sehr häufigen Auslösen des Störsignals führen.

Die Erfindung lässt sich auch zur Dämpfung von Netzfrequenzschwingungen anwenden. Hierzu werden in entsprechender Weise Signale an die einzelnen Windenergieanlagen gegeben, die kontinuierlich über einen längeren Zeitraum jedoch unterschiedlich zueinander an die einzelnen Windenergieanlagen abgegeben werden. Hierzu können Prognosetools herangezogen werden, die hinreichend präzise vorhersagen können, welcher Primärregelleistungsbedarf zu welcher Zeit und an welcher Stelle des Netzes erforderlich sein wird.

Abhängig von dem in der Windenergieanlage verwendeten Umrichter- und Regelungssystem kann es erforderlich sein, zur Nutzung des vollen, mechanisch vorhandenen Potentials an Regelenergie die Auslegung des Umrichters und des Reglers mit anderen Drehzahl/Leistungskennlinien durchzuführen, als bislang üblich oder auch zusätzliche Reserve zur Leistungseinspeisung vorzuhalten. Die "Verteilung" der von einem Windpark insgesamt zur Verfügung zu stellenden Regelleistung auf die individuellen Anlagen kann von einer zentralen Netzsteuerung vorgenommen werden, die in diesem Fall z.B. auch nur eine Windparksteuerung sein kann. Alternativ kann auch jede Anlage selektiv Steuerungssignale in ihrer eigenen Reglereinheit generieren, die zu ihrem aktuellen, individuellen Anlagenzustand korrespondieren.

Erfindungsgemäß wird hierzu ein Regelalgorithmus vorgesehen, der als Reglerziel die Bereitstellung einer vorgebbaren Menge von Regelenergie vorsieht. Diese Menge kann abhängig von der im Netz eingespeisten Windenergie (von lokal in einer Windenergieanlage bis hin zu europaweit) oder auch abhängig von den Vorgaben des Energieversorgers festgelegt werden und kontinuierlichen Änderungen unterliegen. Auch kann die Windenergieanlage (oder der Windpark) die Menge an bereitzustellender Windenergie mit Hilfe eines vorgegebenen Algorithmus aus Betriebsparametern (Netzspannung, Netzfrequenz, Windgeschwindigkeit, Rotordrehzahl, etc.), ggf. unter Zuhilfenahme von Prognoseverfahren individuell bestimmen. Praktisch kann dies bedeuten, dass eine Windenergieanlage mit einer minimalen Rotordrehzahl von 10 rpm beispielsweise mit 14 rpm betrieben wird, obwohl der optimale Energieertrag 12 rpm wäre, weil die vorgegebene Menge an Regelenergiebedarf einer Drehzahldifferenz von 10 zu 14 rpm entspricht.

Auch wird gemäß der Erfindung ein Verfahren zum Bereitstellen von Regelleistung bzw. Primärregelleistung für ein elektrisches Energieerzeuger- und -verteilernetz geschaffen, an welches eine Vielzahl von Kraftwerken, darunter Windenergieanlagen, angeschlossen ist und bei welchem die Regelleistung aus der kinetischen Energie der rotierenden Massen von Windenergieanlagen hergeleitet wird.

Wesentlich für die vorliegende Erfindung ist, dass für die Primärleistung in besonderen Situationen eines Netzes eine "Energiequelle angezapft worden ist", die bislang keine Beachtung fand. Eine gemäß der Erfindung betriebene Windkraftanlage kann die übermäßig abgegebene Leistung nämlich dadurch erbringen, dass die kinetische Energie ihrer bewegten Massen herangezogen wird. Dies kann nur kurzzeitig getan werden, da ansonsten die Drehzahl zu weit absinken würde und die Abschaltung der Windenergieanlage zu befürchten wäre.

Bei umrichtergespeisten Windenergieanlagen ist die abgegebene Leistung nicht unmittelbar abhängig von der Drehzahl. Da die Auslegung des GeneratorlUmrichtersystems nicht auf Nennleistung erfolgt, sondern gewisse Reserven für kurzzeitige Überlasten vorgesehen sind, ist es möglich, kurzfristig etwas mehr Leistung in das Netz zu speisen, als es die Windverhältnisse zulassen. Die Energie wird dann aus den rotierenden Massen (Blätter, Nabe, Triebstrang, Generator) genommen, d.h. entsprechend der Massenträgheit der Rotationsenergie nach der Beziehung ΔE = ½θ (ω₁² - ω₂²).

Die Absenkung der Drehzahl ist damit von der Energie abhängig, die in das Netz gespeist wird. Die zulässige Drehzahlabsenkung, und damit die verfügbare Energie, die eingespeist werden kann, muss anhand der Anlagen- und Umgebungsbedingungen festgelegt werden. In weicher Form die Energie abgerufen wird, kann aber abhängig von den Bedürfnissen des Netzbetreibers festgelegt werden.

So kann eine Energieabgabe proportional zur Abweichung der Netzfrequenz erfolgen, es kann aber z.B. auch ein D-Verhalten vorgegeben werden, das bei schnellen Änderungen der Frequenz mehr einspeist.

Zum Ausregeln von Netzstörungen kann z.B. eine Schwelle festgelegt werden, z.B. wenn die Frequenz mit einer gewissen Geschwindigkeit abnimmt oder eine gewisse Grenze unterschritten hat, ab der erst reagiert wird.

Die in den rotierenden Massen einer Windenergieanlage gespeicherte kinetische Energie ist begrenzt. Die Frequenz ist aber eine Größe eines Netzes, die mit kurzer Verzögerung im gesamten Netz gemessen werden kann. Damit können auch Windenergieanlagen, die mehrere hundert Kilometer von einer Störungsstelle entfernt stehen, einen Beitrag zur Regelung leisten. Durch die große Anzahl installierter Windenergieanlagen kann auch ein kleiner Beitrag je Windenergieanlage in der Summe einen nennenswerten Effekt auf das Netz haben.

In Windparks kann eine Zuteilung der Regelleistung zu einzelnen Windenergieanlagen erfolgen. Die aus Windrichtungssicht hinten liegenden Windenergieanlagen können einen größeren Beitrag zur Regelleistung liefern, da sie in der Regel weniger ausgelastet sind. Informationen über die Windgeschwindigkeit der weiter vom liegenden Windenergieanlagen können genutzt werden, um die verfügbaren Grenzen des Systems (erlaubtes Drehzahlband in Abhängigkeit von der kurzfristig zu erwartenden Windgeschwindigkeit) besser ausnutzen zu können. Sinnvoll ist ein Einsatz in Kombination mit einer Windprognose, um sicherzustellen, dass z.B. für die nächsten 24 Stunden ausreichend Wind vorhanden ist, damit die Rotoren aller Windenergieanlagen sich drehen und ausreichend Regelleistung vorhalten können.

Wenn notwendig kann die Drehzahl von Windenergieanlagen bei niedrigen Windgeschwindigkeiten erhöht werden, um immer über der Minimaldrehzahl des Arbeitsbereichs zu liegen.

Die besonderen Eigenschaften der Verfahren gemäß der Erfindung sind:
1. Reduzierung der zum Ausregeln von Netzfehlern notwendigen Regelreserve im Netz
2. Reduzierung von Frequenzänderungen im Netz (bzw. der zur Vermeidung von Frequenzänderungen notwendigen Regelleistung)
3. Geringere Anregung von Frequenzänderungen im Netz durch die Windenergieanlage
4. Keine bzw. geringe Ertragsverluste beim Betrieb als Notfallreserve
5. Geringe Ertragsverluste beim Dauereinsatz zur Dämpfung von Frequenzänderungen

Wesentlich zur Realisierung der vorliegenden Erfindung ist, dass die Windenergieanlagen so betrieben werden können, dass sie auf Steuerungssignale ansprechen können. Dies bedeutet, dass die Windenergieanlage auf diesen Betrieb vorbereitet ist und der Netzbetreiber sich auf die Reaktion der Windenergieanlagen beim Auftreten eines Störungssignals verlassen kann, damit die entsprechenden Wechselwirkungen eintreten können.

In der Ausführung mit von einer Zentrale gesendetem Störsignal basiert die Erfindung auch auf einer gewissen Kooperation der Windenergieanlagen- und Netzbetreiber. Der Netzbetreiber muss die auftretenden Störungen erfassen und in Form des Störungssignals an die Windenergieanlagenbetreiber weiterleiten.

Für die Übertragung dieses Störungssignals kommen alle nur möglichen Übertragungswege in Betracht, seien diese nun leitungsgebunden oder nicht.

Die Erfindung kann nun nicht nur vorteilhaft eingesetzt werden, um eine Regelreserve zum Ausgleich von Wirkleistungsdefiziten nach Fehlern im Netz zur Verfügung zu stellen, sondern auch wenn es darum geht Dämpfungen von Oszillationen der Frequenz in elektrischen Energieverteilungsnetzen zu realisieren.

In erster Näherung ist die Änderung der Netzfrequenz ein Maß für die Differenz von eingespeister zu abgegebener Leistung. Die Größe der notwendigen Stellgrößen ist abhängig von der Massenträgheit der im Netz vorhandenen rotierenden Massen. Werden in einem elektrischen Energieverteilungsnetz Erzeuger mit hoher Massenträgheit durch solche mit niedriger Massenträgheit ersetzt, muss eine schnellere Reaktion des Regelsystems erfolgen, um eine Änderung der Netzfrequenz zu vermeiden. Ist keine schnelle Reaktion möglich, so muss entweder eine größere Frequenzabweichung zugelassen werden, oder es wird versucht, durch eine höhere Stellgröße die Frequenzabweichung zu reduzieren. Dies hat aber häufig den Nachteil eines Überschwingens und damit längerer Einregelzeiten bis die Frequenz wieder in dem gewünschten Frequenzband ist.

Um eine dauerhafte Abweichung der Netzfrequenz zu vermeiden, gehört die Regelung der Netzfrequenz zu den üblichen Aufgaben von Kraftwerken: Bei einer Frequenz oberhalb der Nennfrequenz wird die in das Netz eingespeiste Leistung reduziert und bei einer Frequenz unterhalb Nennfrequenz wird die eingespeiste Leistung erhöht. Die Reduktion oder Erhöhung der elektrischen Leistung erfolgt in der Regel durch eine Regelung der Energiezufuhr bzw. des Brennstoffs im Kraftwerk.

Die Regelung der Netzfrequenz ist eine der zentralen Anforderungen an elektrische Energieverteilungsnetze. Weicht die Netzfrequenz über eine gewisse Schwelle hinaus von der Nennfrequenz ab, werden schrittweise Verbraucher und Erzeuger ab- oder zugeschaltet.

Die für die Ausregelung der sich in Folge von Laständerungen, insbesondere aber nicht nur infolge einer Reduktion der zur Verfügung stehenden Leistung der Erzeuger schnell ergebenden Frequenzänderungen wird Regelenergie benötigt, die bereitstehen muss bis
a) das entstandene temporäre Leistungsdefizit wieder ausgeglichen oder
b) die Leistung langsamer regelbarer Erzeuger erhöht werden konnte.

Eine Reduktion der eingespeisten Leistung von Windenergieanlagen ist in der Regel einfacher möglich als eine Erhöhung der eingespeisten Leistung. Im Fall einer zeitweiligen Reduktion der eingespeisten Leistung unter die durch die vom Wind zur Verfügung gestellte Leistung bzw. die übliche maximale Leistung führt für die Dauer der Leistungsreduktion zu einem Ertragsrückgang, ohne dass dem - wie z.B. bei thermischen oder Wasserkraftwerken möglich - eine Einsparung an Primärenergie gegenübersteht.

Verfahren zur Erhöhung des Energieertrags einer Windenergieanlage durch Beeinflussung der Drehzahl sind bekannt, um möglichst schnell den optimalen Arbeitspunkt der Rotorblätter zu erreichen.

Eine Entkopplung von eingespeister Leistung und Drehzahl ist ein übliches Verfahren zur Regelung von Windenergieanlagen, z.B.
a) um eine Vergleichsmäßigung der Einspeiseleistung zu erzielen,
b) um eine Reduktion von Lasten zu erzielen, z.B. um beim Betrieb bei einem gewählten Drehzahlarbeitspunkt für die Blattwinkelregelung die Schwankungen des Moments zu reduzieren,
c) um eine konstante oder vorgegebene Einspeiseleistung zu erzielen, und
d) um insbesondere bei einem Betrieb mit konstanter Einspeisung in begrenztem Umfang kinetische Energie im Rotor zu speichern, um einen höheren Energieertrag oder reduzierte Lasten zu erzielen.

Die Veränderung der Drehzahl einer Windenergieanlage ist ein übliches Verfahren, z.B. um
a) den Energieertrag durch eine bessere aerodynamische Ausnutzung der Blätter zu erhöhen,
b) eine Reduktion von Lasten zu erzielen, u.a. auch zur Vermeidung der Anregung von Eigenfrequenzschwingungen,
c) eine Reduktion von Schallemissionen zu erzielen und um
d) sicherzustellen, dass eine Windenergieanlage auch bei starken Turbulenzen den zulässigen Betriebsbereich nicht verlässt.

Um die Leistung gegenüber einem gegebenen Arbeitspunkt zu erhöhen, muss ein Teil der verfügbaren Leistung als Reserve bereitgehalten werden. Dies führt z.B. bei thermischen oder Wasserkraftwerken in der Regel zu keinen oder geringen finanziellen Einbußen.

Die Erfindung wird nachstehend anhand der Zeichnungen beispielsweise erläutert.
- Figur 1: zeigt eine Kennlinie einer Windenergieanlage.
- Figur 2: zeigt eine Darstellung des Leistungsbeiwertes Rotorblattes einer Windenergieanlage in Abhängigkeit vom Blattwinkel und der Schneillaufzahl.
- Figur 3: zeigt eine zeitliche Darstellung der Schwingungen der Netzfrequenz in Folge eines Lastausfalls.

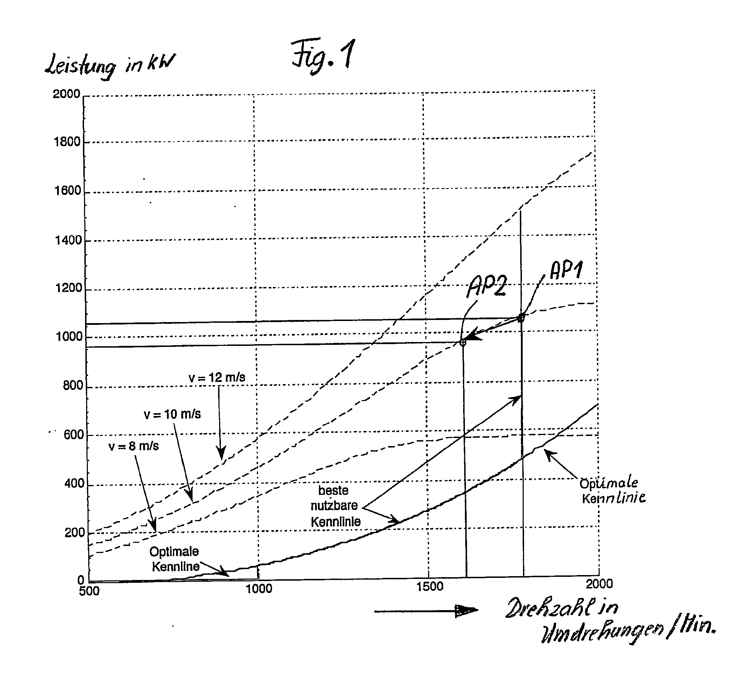

Die aerodynamischen Verhältnisse an einer Windenergieanlage führen dazu, dass es für jede Windgeschwindigkeit eine optimale Drehzahl gibt, mit der die Windenergieanlage betrieben werden sollte, um den maximalen Ertrag zu erzielen. Dies ist am Beispiel für Windgeschwindigkeiten von 8 m/s, 10 m/s und 12 m/s in Figur 1 dargestellt als Leistung in Abhängigkeit von der Drehzahl. Werden die Maxima dieser einzelnen Kurven verbunden, ergibt sich die optimale Kennlinie für den Betrieb einer Windenergieanlage ("optimale Kennlinie") mit gebenem Rotorblatt. In der Praxis ist der verfügbare Drehzahlbereich begrenzt (im gegebenen Beispiel auf Generatordrehzahlen von 1000 bis 2000 rpm), so dass im stationären Betrieb nur Arbeitspunkte auf der mit "beste nutzbare Kennlinie" beschrifteten Kurve gewählt werden, die zunächst der optimalen Kennlinie folgt und ab der Drehzahl von 1780 rpm bei fester Drehzahl bis zur Nennleistung ansteigt.

Erfolgt im AP1 bezeichneten Arbeitspunkt (1780 rpm, 1050 kW) eine Aktivierung der Reserveleistung, so sinkt die Drehzahl der Windenergieanlage bei angenommener konstanter Windgeschwindigkeit von 10 m/s auf den Arbeitspunkt AP2 (1580 rpm, 975 kW) ab, da (befristet) mehr Leistung in das Netz gespeist wird, als durch den Wind aufgenommen werden kann.

Bei der Realisierung der Erfindung (siehe Figur 1) ist zu beachten, dass die in der Windenergieanlage gespeicherte, nutzbare Energie begrenzt ist (die Windenergieanlage darf die Untergrenze des Drehzahlbereichs nicht verlassen), und dass eine starke Drehzahlreduzierung zum Betrieb in einem schlechteren Arbeitspunkt führt. Bei einer Absenkung um 200 rpm verschiebt sich der Arbeitspunkt von AP1 nach AP2. Dort können bei gleichen Windverhältnissen bei unverändertem Blattwinkel etwa 5 % weniger Leistung aus dem Wind gewonnen werden. Eine noch weitergehende Absenkung der Drehzahl kann unter Umständen die nach dem Ende der zusätzlichen Leistungseinspeisung (in diesem Beispiel nach 10 Sekunden) verfügbare Einspeiseleistung kurzfristig deutlich reduzieren.

Durch eine Veränderung des Blattwinkels im neuen Arbeitspunkt AP2 lässt sich die Energieausbeute optimieren. Unabhängig davon kann durch modifizierte Blattentwürfe in Zukunft ein bei Arbeitspunkten abseits des Nennpunkts höherer Ertrag erzielt werden.

Die gespeicherte Energie im Rotor kann kontinuierlich überwacht werden. Dabei werden in der Regel die Anlagendrehzahl, die Windgeschwindigkeit und die nach einer Drehzahlreduzierung verbleibende mögliche Einspeisung betrachtet. Ausreichend ist es jedoch, nur die aktuelle Drehzahl zu überwachen und beim Vorliegen eines Störungssignals solange Überleistung einzuspeisen, bis die Rotordrehzahl auf die zulässige Minimaldrehzahl gefallen ist. Gibt es Vorgaben für eine minimal bereitzuhaltende Regelnergie, wird die Mindestdrehzahl der Windenergieanlage entsprechend vorgegeben, und sofern es die Windverhältnisse ermöglichen, auch eingehalten. Auf Anforderung (z.B. Spannungsabsenkung um mehr als 10 % innerhalb von 100 ms oder schnelle Frequenzänderung von mehr als 100 mHz in 1 s oder ein extern übermitteltes Signal) wird die Reserveenergie aktiviert. Eine zu definierende Leistung wird zusätzlich zu der gemäß Windenergieanlage-Kennlinie verfügbaren Energie in das Netz gespeist.

Der genaue zeitliche Verlauf der Einspeisung der Reserveenergie kann in Absprache mit dem Netzbetreiber erfolgen: kurze Zeit viel Energie, längere Zeit wenig Energie oder der Verlauf kann sich zeitlich ändern, z.B. zunächst viel, dann weniger Energie.

Die einzuspeisende Energiemenge kann direkt vorgegeben oder indirekt (z.B. über die Dauer oder nach Absinken auf eine bestimmte Drehzahl) definiert werden.

Nach Erreichen des Endes der zusätzlichen Energieeinspeisung kehrt die Windenergieanlage wieder zum alten Arbeitspunkt zurück. Es wird im Mittel nur noch maximal so viel Energie eingespeist, wie durch den Wind verfügbar ist.

Folgende Sonderfälle können in Betracht gezogen werden:

Auf Anforderung kann eine Erhöhung der Anlagendrehzahl gegenüber dem normalen Betriebspunkt erfolgen, um zusätzliche Energie für einen möglichen Fehler bereitstellen zu können.

Wenn es die Windverhältnisse zulassen (z.B. wenig Turbulenz), kann diese Erhöhung der Anlagendrehzahl auch über den Nennarbeitspunkt der Windenergieanlage hinaus erfolgen.

Bei Windgeschwindigkeiten über Nennwind kommt ein 2-stufiges Verfahren zum Einsatz
a) es erfolgt auf Anforderung zunächst sofort eine Einspeisung zusätzlicher Energie
b) durch Verstellen der Blätter hin zum optimalen Arbeitspunkt wird die Leistungsaufnahme der Windenergieanlage (sofern es die Windverhältnisse zulassen) so erhöht, dass es zu keinem weiteren Absinken der Anlagendrehzahl kommt und es wird der ursprüngliche Arbeitspunkt wieder angefahren.

Befindet sich eine Windenergieanlage in der (räumlichen) Nähe eines Kurzschlusses, so kann es sinnvoll sein, zunächst einen (großen) Teil des verfügbaren Stroms (bzw. der Leistung) der Windenergieanlage (als Blindstrom bzw. Blindleistung) zur Stützung der Netzspannung aufzuwenden (z.B. bis die Netzspannung wieder 90 % der vorherigen Spannung erreicht hat). Die Einspeisung der Reserveleistung erfolgt dann erst im Anschluss an die Wiederherstellung der Netzspannung.

Nützlich ist das oben genannte Verfahren z.B. um den kurzfristigen Ausfall von Einspeiseleistung nach einem Fehler (Kurzschluss) im Netz zu überbrücken. Windenergieanlagen bisheriger Bauart trennen sich nach einem solchen Fehler vom Netz. In der Zeit, die solche Windenergieanlagen benötigen, um wieder auf das Netz zu schalten, kann eine zusätzliche Einspeisung von Energie das Absinken der Netzfrequenz verhindern oder zumindest reduzieren, so dass die Entstehung einer kritischen Situation im Netz vermieden werden kann.

Wird weniger Leistung in das Netz gespeist als ihm durch Verbraucher entzogen wird, sinkt die Netzfrequenz. In Folge des Ausfalls von einspeisender Leistung, z.B. nach einem Kurzschluss im Netz, kann es zu einem merklichen Absinken der Netzfrequenz kommen.

Auch weit von einem Fehlerort entfernte Windenergieanlagen können die Frequenzänderung erfassen und darauf reagieren. Sinkt die Netzfrequenz z.B. um mehr als 50 mHz innerhalb von 1 Sekunde, so sollte zusätzliche Leistung in das Netz eingespeist werden.

Steigt die Netzfrequenz dann wieder an, so treten Schwingungen auf und machen eventuell eine zusätzliche Einspeisung von Reserveenergie, d.h. eine Dämpfung der Schwingung, notwendig.

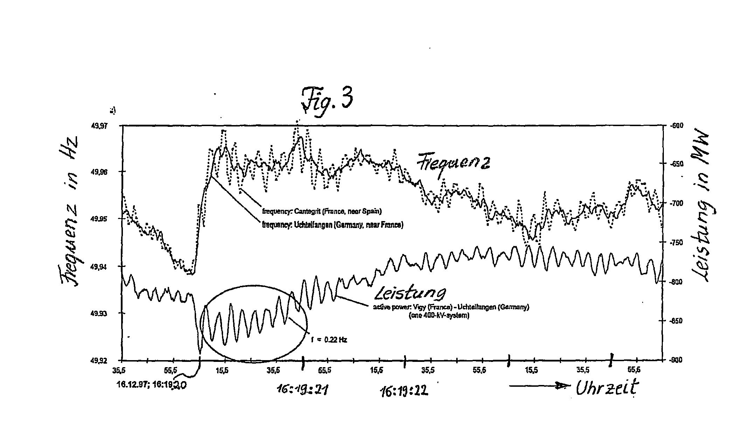

Typische Schwankungen der Netzfrequenz in Folge netzweiter Schwingungen ("Inter Area Osciiiations") liegen in Europa (UCTE-Netz) zur Zeit zwischen 0,2 und 0,8 Hz. Bei dem in Figur 3 gegebenen Fall (0,22 Hz = Periodendauer 4,5 s) muss die Windenergieanlage also 2,25 Sekunden zusätzliche Leistung in das Netz einspeisen und 2,25 Sekunden die Leistungseinspeisung in das Netz reduzieren, um die Schwingung dämpfen zu können.

Soll die Drehzahl der Windenergieanlage sich (bei Nenndrehzahl) z.B. um nicht mehr als 50 rpm ändern, könnte z.B. 5 % der Augenblicksleistung für eine Dämpfung von Eigenfrequenzen des Netzes genutzt werden.

Konventionelle Konzepte der Frequenzregelung nutzen eine Androsselung (durch Verstellen des Blattwinkels bei Windenergieanlagen), um Leistungsreserven für Regelungsaufgaben bereitzuhalten.

Durch Nutzung der gespeicherten Energie kann eine Reduktion des Regelungsaufwandes bei minimaler Ertragsreduktion erzielt werden. Bei einer Frequenzregelung mit 2 % der Nennleistung kann z.B. im Betrieb oberhalb von Nennwind durch eine Anpassung des Blattwinkels (Windenergieanlage ist schon angedrosselt, um die Leistung zu begrenzen) die Leistung wieder erhöht werden. Hierbei sind natürlich die Auslegungsgrenzen der Windenergieanlage (ggf. in Abhängigkeit der aktuellen Umgebungsbedingungen) zu beachten. Unter Nennwind kann für bis zu 30 Sekunden mehr (bei abnehmender Frequenz) oder weniger (bei zunehmender Frequenz) Energie in das Netz eingespeist werden, ohne dass ein Betrieb mit angedrosselter Windenergieanlage (und damit deutlichen Ertragsverlusten) notwendig ist.

Es ist bekannt, dass die in einem Netz verfügbare, durch konventionelle Kraftwerke bereitgestellte Regelleistung nur mit einer zeitlichen Verzögerung aktiviert werden kann. Eine übliche Vorgabe ist, dass innerhalb von 5 Sekunden 50 % der verfügbaren Frimärregeienergie aktiviert werden soil und erst innerhaib von 30 Sekunden die gesamte bereitgestellte Primärregelenergie verfügbar sein muss. Hier liegt ein Vorteil der Erfindung, die es ermöglicht, diese Lücke in gewissen Grenzen zu schließen, weil die Aktivierung der Reserveenergie der Windenergieanlagen innerhalb von weniger 100 ms nach Erkennung des Frequenzabfalls möglich ist.

Zwar ist die insgesamt verfügbare Energie begrenzt, sie ist jedoch geeignet, die Zeit zu überbrücken, bis
a) konventionelle Kraftwerke zusätzliche Regelleistung bereitstellen und
b) Windenergieanlagen, die z.B. sich auf Grund eines Spannungseinbruchs vom Netz getrennt haben, wieder Leistung einspeisen.

Wie aus Figur 1 ersichtlich ist, führt die Aktivierung von Reserveenergie z.B. bei einer Windgeschwindigkeit von 8 m/s auch bei einem Absinken der Drehzahl um 200 rpm nur zu einem minimalen Absinken der Leistung, die aufgrund der Aerodynamik der Rotorblätter eingespeist werden kann.

Anders ist die Situation bei hohen Windgeschwindigkeiten. Hier führt ein Absinken der Drehzahl um 200 rpm zu einem schlechteren Arbeitspunkt. Die Leistung, die in diesem Arbeitspunkt (AP2) in das Netz eingespeist werden kann, liegt deutlich unter der Leistung, die bei Nenndrehzahl eingespeist werden kann (AP1). Dies wirkt zunächst wie ein Nachteil des Verfahrens, da nach Beendigung der Reserveenergieeinspeisung weniger Leistung eingespeist werden kann als vor der Aktivierung. Bei einer genaueren Betrachtung zeigt sich jedoch, dass die Windgeschwindigkeit zeitlich und örtlich unterschiedlich ist. Wird eine größere Anzahl von Windenergieanlagen im Netz betrieben, wird es im Fall einer im Mittel hohen Windgeschwindigkeit auch eine nennenswerte Anzahl von Windenergieanlagen geben, bei denen die Windgeschwindigkeit über der Nennwindgeschwindigkeit liegt. Diese Windenergieanlagen werden schon angedrosselt betrieben, d.h. die Windverhältnisse würden eine höhere Einspeisung erlauben als durch die Windenergieanlagen eingespeist wird. Diese Windenergieanlagen können, sofern sie in der Lage sind, befristet mehr als Nennleistung in das Netz zu speisen, das Absinken der Drehzahl nach Aktivierung der Reserveenergie durch eine Veränderung des Blattwinkels nicht nur begrenzen, sondern die Drehzahl sogar wieder auf ihren ursprünglichen Wert zurückregeln. Sofern die Auslegung der Windenergieanlage das zulässt, können sie sogar längerfristig (z.B. für 30-60 Sekunden statt nur für 5 s - 10 s) 10 % mehr Leistung in das Netz einspeisen. Sie können damit z.B. so lange mehr Energie einspeisen, bis die Windenergieanlagen, die nach Beendigung der Reserveenergieeinspeisung in einen ungünstigen Arbeitspunkt betrieben werden, wieder ihren ursprünglichen Arbeitspunkt angefahren haben.

Als Beispiel einer Auslegung im Fehlerfall wird eine Windenergieanlage mit 1,5 MW Nennleistung und 70 m Rotordurchmesser zu Grunde gelegt:
Die Massenträgheit der Windenergieanlage beträgt ca. 450 kgm²,
die Nenndrehzahl ist 1780 rpm und somit ergibt sich eine kinetisch gespeicherte Energie von 7,6 MWs.

Bei Nenndrehzahl steht bei einer Absenkung der Drehzahl um 200 rpm dann eine Energie von 760 kWs zur Verfügung. Somit kann z.B. für 10 Sekunden bs zu 163 kW Leistung (bis zu 11 % der Nennleistung) oder für 5 Sekunden bis zu 22 % der Nennleistung zusätzlich eingespeist werden.

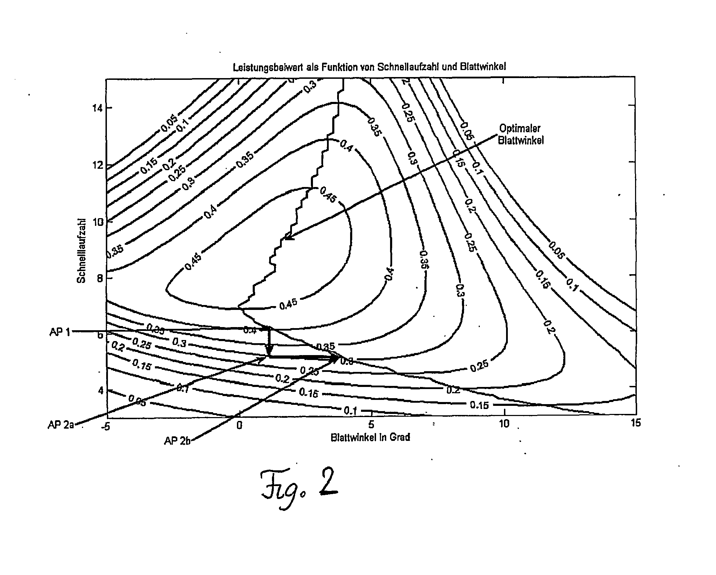

In Figur 2 ist der Leistungsbeiwert als Funktion von Blattwinkel und Schnelllaufzahl dargestellt, d.h. dem Verhältnis von Umfangsgeschwindigkeit der Blattspitze zur anströmenden Windgeschwindigkeit. Der Leistungsbeiwert beschreibt den Teil der Energie, der dem Wind durch die Rotorblätter entzogen werden kann. Höhere Werte sind daher anzustreben.

Durch das Absinken der Drehzahl in Folge der Aktivierung der Reserveenergie verändert sich der Arbeitspunkt von AP1 in Richtung AP2a. Es verschlechtert sich der Leistungsfaktor und damit sinkt die Leistung, die die Windenergieanlage aus dem Wind gewinnen kann. Durch eine Veränderung des Blattwinkels kann der Effekt aber reduziert werden, indem ein Betrieb im Arbeitspunkt AP2b angestrebt wird. Anzumerken ist, dass es im Betrieb einer Windenergieanlage keine wirklich stationären Arbeitspunkte gibt. Real variieren die Betriebsbedingungen (z.B. Windgeschwindigkeit) ständig, so dass durch eine dynamische Regelung die Windenergieanlage in einem Arbeitsbereich gefahren wird. Dies ist durch den unscharfen Verlauf des Blattwinkels in der Figur 2 angedeutet worden.

Gibt es Vorgaben für eine minimal bereitzuhaltende Energie, wird die Mindestdrehzahl der Windenergieanlage entsprechend vorgegeben, und sofern es die Windverhältnisse ermöglichen, auch eingehalten.

Sinkt die Netzfrequenz innerhalb einer Sekunde um mehr als 0,05 Hz, wird die Reserveenergie aktiviert. Die von der Windenergieanlage in das Netz eingespeiste Leistung wird kurzfristig um 10 % gegenüber der gemäß Windenergieanlagen-Kennlinie aktuell durch den Wind verfügbaren Leistung erhöht.

Die Aktivierung der Reserveenergie erfolgt für maximal 10 Sekunden. Steigt in der Zwischenzeit die Netzfrequenz wieder auf den Wert der Nennfrequenz, wird die Reserveenergieeinspeisung (vorzeitig) beendet. Nach Beendigung der zusätzlichen Energieeinspeisung kehrt die Windenergieanlage wieder zum alten Arbeitspunkt zurück. Es wird im Mittel nur noch maximal so viel Energie eingespeist, wie durch den Wind verfügbar ist.

Figur 3 zeigt ein Beispiel (Lastausfall am 16.12.1997 in Spanien: 500 MW. Messungen der Inter-Area-Schwingungen 0,22 Hz in Frankreich und Deutschland) für eine gemessene Schwingung der Netzfrequenz des Energieversorgungsnetzes, wie sie gemäß vorliegender Erfindung gedämpft werden kann. Die untere Kurve zeigt den zeitlichen Verlauf der Leistung (Maßstab rechts). Die oberen Kurven zeigen die an zwei Orten gemessenen Frequenzen (Maßstab links), und zwar in Cantegrit (Frankreich), also in der Nähe des Ortes der Störung, und in Uchtelfangen (Deutschland), also weiter entfernt vom Ort der Störung. Typische Schwankungen der Netzfrequenz infolge netzweiter Schwingungen ("Inter Area Oscillations") liegen in Europa (UCTE-Netz) zur Zeit zwischen 0,2 und 0,8 Hz. Diese Schwingungen sind in ihrer Amplitude wenig ausgeprägt und sind teilweise nur schwach gedämpft. Durch ihre Periodizität ist es einer zentralen oder dezentralen Netzüberwachung möglich, ein auf die Schwingung synchronisiertes, gegenphasiges Regelsignal zu generieren, mit welchem die Steuereinrichtung zur Bereitstellung von kinetischer Regelenergie angesprochen wird. Im oben angegebenen Fall (0,22 Hz = Periodendauer 4,5 s) muss die Windenergieanlage also 2,25 s lang zusätzliche Leistung in das Netz einspeisen und 2,25 s lang die Leistungseinspeisung in das Netz reduzieren, um die Schwingung zu dämpfen. Durch ihre Periodizität ist bei Auswahl eines geeigneten Filters eine deutlich niedrigere Ansprechschwelle des Regelverfahrens sinnvoll, als es im Fall einer Netzstörung der Fall ist. So kann es sinnvoll sein, schon ab einer Amplitude von 0,001 Hz ein Stellsignal zu generieren, wenn die Schwingung für längere Zeit vorliegt (z.B. mehr als 5 -10 Perioden).

## Patentansprüche

1. Verfahren zum Betrieb mindestens einer Windenergieanlage mit einem Rotor und einem mit dem Rotor gekoppelten elektrischen Generator zum Abgeben elektrischer Leistung in ein Energieverteilungsnetz mit Hilfe einer Regeleinrichtung, die den Betrieb der Windenergieanlage in deren Arbeitsbereich sicherstellt, mit folgenden Schritten:
a. Betreiben der Windenergieanlage im ungedrosselten Arbeitsbereich gemäß der besten nutzbaren Kennlinie der Windenergieanlage;
b. Erfassen von Änderungen eines Netzbetriebsparameters des Energieverteilungsnetzes;
c. Verändern des Betriebs der Windenergieanlage, wenn eine nicht vorhergesehenen Änderung des Netzbetriebsparameters auftritt, dahingehend, dass der ungedrosselte Arbeitsbereich verlassen wird und eine Leistung in das Energieverteilungsnetz eingespeist wird, die um eine Übermaßleistung größer ist als den Windverhältnissen entsprechend, wobei die Übermaßleistung der kinetischen Energie des Rotors entnommen wird;
d. Zurückkehren zum Betrieb im ungedrosselten Arbeitsbereich gemäß der besten nutzbaren Kennlinie der Windenergieanlage, wenn das Einspeisen der Übermaßleistung abgeschlossen ist.

2. Verfahren nach Anspruch 1, **dadurch gekennzeichnet, dass** eine Reserveenergie bestimmt wird für die Übermaßleistung, wobei vorzugsweise Zeitdauer bzw. Übermaßleistung gegenläufig einstellbar sind.

3. Verfahren nach Anspruch 2, **dadurch gekennzeichnet, dass** für etwa 10 s eine Übermaßleistung von bis zu 11 % der Nennleistung zur Verfügung gestellt wird oder für etwa 5 s eine Übermaßleistung von bis zu 22 % der Nennleistung zur Verfügung gestellt wird oder für etwa 1 s eine Übermaßleistung von bis zu 100% der Nennleistung zur Verfügung gestellt wird.

4. Verfahren nach mindestens einem der Ansprüche 1 bis 3, **dadurch gekennzeichnet, dass** eine Mehrzahl von Windenergieanlagen über eine Mehrzahl unterschiedlicher Signale angesteuert wird.

5. Verfahren nach Anspruch 4, **dadurch gekennzeichnet, dass** eine der Mehrzahl von Windenergieanlagen die Übermaßleistung, vorzugsweise etwa 10 % der Nennleistung, überlang, vorzugsweise von 30 bis 60 s, einspeist.

6. Verfahren nach Anspruch 5, **dadurch gekennzeichnet, dass** während des überlangen Einspeisens mindestens eine andere der Mehrzahl von Windenergieanlagen wieder zum ungedrosselten Betrieb zurückkehrt.

7. Verfahren nach einem der Ansprüche 1 bis 6, **dadurch gekennzeichnet, dass** im ungedrosselten Betrieb ein Arbeitspunkt mit erhöhter Drehzahl eingestellt wird.

8. Verfahren nach einem der Ansprüche 1 bis 7, **dadurch gekennzeichnet, dass** bei einem Spannungseinbruch zuerst vorrangig Blindstrom zur Stützung eingespeist wird, und Übermaßleistung erst dann eingespeist wird, wenn die Spannung eine vorgebbare Schwelle, von vorzugsweise 90 % der Nennspannung, wieder überschritten hat.

9. Verfahren zum Betreiben einer Mehrzahl von Windenergieanlagen, **dadurch gekennzeichnet, dass** die einzelnen Windenergieanlagen gemäß einem der Ansprüche 1 bis 8 betrieben werden.

10. Verfahren nach Anspruch 9, **dadurch gekennzeichnet, dass** bei Überschreiten eines vorgegebenen Grenzwerts entsprechende Grenzwert- und Störungssignale kontinuierlich an die Windenergieanlagen abgegeben werden, um Netzfrequenzschwingungen oder -schwankungen zu dämpfen (kontinuierlicher Betrieb).

11. Verfahren nach Anspruch 9, **dadurch gekennzeichnet, dass** ein Störungssignal bei einem Frequenzabfall im Bereich zwischen 0,01 Hz und 0,2 Hz in 1 s erzeugt wird, vorzugsweise bei 0,05 Hz pro s (Gradientenbetrieb) und/oder ein bestimmter Anteil, vorzugsweise 5 %, der Augenblicksleistung zur Dämpfung verwendet wird und/oder eine Begrenzung auf einen Teil, vorzugsweise 2 %, der Nennleistung erfolgt.

12. Verfahren nach einem der Ansprüche 9 bis 11, **dadurch gekennzeichnet, dass** bei Schwankungen der Netzfrequenz in einem Energieversorgungsnetz ein gegenphasiges Regelsignal generiert wird.

13. Verfahren nach Anspruch 12, **dadurch gekennzeichnet, dass** das Regelsignal derart gebildet ist, dass für eine erste Zeitdauer, vorzugsweise eine halbe Periodendauer der Netzschwankungsfrequenz, die Leistungseinspeisung in das Netz erhöht und für eine weitere zweite Zeitdauer, die vorzugsweise gleichlang wie die erste Zeitdauer ist, verringert wird.

14. Verfahren nach Anspruch 12 oder 13, **dadurch gekennzeichnet, dass** das Regelsignal erst ab einer Schwankung der Netzfrequenz um mindestens 0,001 Hz (1 mHz) erfolgt.

15. Verfahren nach einem der Ansprüche 9 bis 14, **dadurch gekennzeichnet, dass** die mehreren Windenergieanlagen je nach Reserveenergie mit verschiedenen Drehzahl-/Leistungskennlinien geregelt werden.

16. Verfahren nach einem der Ansprüche 9 bis 15, **dadurch gekennzeichnet, dass** die Übermaßleistung vorrangig durch weniger ausgelastete Windenergieanlagen bereitgestellt wird, wobei vorzugsweise eine zentrale Verteilung vorgesehen ist.

17. Windenergieanlage mit einem Rotor, einem mit dem Rotor gekoppelten elektrischen Generator und einem Umrichter zum Abgeben elektrischer Leistung in ein Energieverteilungsnetz mit Hilfe einer Regeleinrichtung, wobei die Regeleinrichtung dazu ausgebildet ist:
a. die Windenergieanlage in ungedrosseltem Arbeitsbereich gemäß der besten nutzbaren Kennlinie der Windenergieanlage zu betreiben;
b. Änderungen eines Netzbetriebsparameters des Energieverteilungsnetzes zu erfassen;
c. den Betrieb der Windenergieanlage bei Auftreten einer nicht vorhergesehenen Änderung des Netzbetriebsparameters dahingehend zu verändern, dass der ungedrosselte Arbeitsbereich verlassen wird und eine Leistung in das Energieverteilungsnetz eingespeist wird, die um eine Übermaßleistung größer ist als den Windverhältnissen entsprechend, wobei die Übermaßleistung der kinetischen Energie des Rotors entnommen wird;
d. zum Betrieb im ungedrosselten Arbeitsbereich gemäß der besten nutzbaren Kennlinie der Windenergieanlage zurückzukehren, wenn das Einspeisen der Übermaßleistung abgeschlossen ist.

18. Windenergieanlage nach Anspruch 17, **dadurch gekennzeichnet, dass** die Regeleinrichtung weiter dazu ausgebildet ist, gemäß einem der Ansprüche 2 bis 8 zu verfahren.

19. Windenergieanlage nach Anspruch 17 oder 18, **dadurch gekennzeichnet, dass** nach einem der Ansprüche 9 bis 16 weitere Windenergieanlagen vorgesehen sind, wobei die Regeleinrichtung vorzugsweise an einem Parkmaster angeordnet ist.
